# EUROPEAN PATENT APPLICATION

(11) **EP 0 778 529 A1**
(43) Date of publication of application: **11.06.1997**
(21) Application number: 96308820.8
(22) Date of filing: 05.12.1996
(51) Int. Cl.: G06F 11/22

(54) **System for performing remote diagnostic services and remote restoring services**

(30) Priority: 05.12.1995 KR 9546798
(71) Applicant: Samsung Electronics Co., Ltd., Suwon City, Kyungki-do (KR)
(72) Inventor: Choi, Yun-Ho, Eunpyung-gu, Seoul (KR)
(74) Representative: Tunstall, Christopher Stephen

(57) **Abstract**

A system for performing remove restoring services on a user computer is described. The user computer executes a self-diagnostic program to produce user computer information and transmits the user computer information through a modem to a communications line. A service support computer receives and analyzes the user information and transmits data through the communications line to permit the user computer to restore a user computer failure detected by the analysis. The user computer then performs a restoring routine in response to data received through the communications line.

## Description

### Background to the Invention

The present invention relates to a system for performing remote diagnostic services and remote restoring services. More particularly, this invention is relates to a method for performing remote diagnostic services and remote restoring services for personal computers which fail to operate in the expected manner.

Personal computers have been used in an increasing number of business, home and recreational applications. Personal computer systems have also increased in their complexity and diversity. The average personal computer user, while having a working understanding of their specific applications and, perhaps, a basic working knowledge of the computer system itself, is generally unfamiliar with the hardware design, operating systems and computer system configuration. When a computer fails to operate in the expected manner, the user is often unable to determine the source of the problem or the necessary corrective action. The user may attempt to address the problem utilizing various diagnostic programs and manuals supplied by the computer manufacturer. However, it will be appreciated that much of the information contained within the diagnostic programs and manuals is often beyond the understanding of the average user. Further, the user may be unable to discern the importance of the various test results.

When faced with this problem, the user may call the computer manufacturer's customer service line or service support in an effort to obtain technical help. This generally entails calling a service support representative and leaving a recording of the user's name and telephone number. A service support representative then calls the user back and records information concerning the user, the type of computer and attempts to determine the nature of the problem based on information provided by the user. The representative generally instructs the user to perform various diagnostic services over the phone and the user describes the results of such tests to the representative. The representative may also attempt to emulate the problem on his own computer in an effort to determine the nature of the problem.

This process is often slow and unsatisfactory. The amount of time required for the user to describe accurately the problem to the service support representative is often considerable. Further, the process of the representative instructing the user to perform various diagnostic services or corrective action is time consuming. It is also frequently plagued by inaccurate instructions being conveyed to the user over the phone. The process of the user reporting the results of the diagnostic tests to the representative over the phone may likewise be plagued with communications errors.

One means of speeding up this process is the use of remote diagnostic services. Remote computer diagnostic services are well known in mainframe computer applications. The user calls a customer service representative and explains the nature of the problem. The representative then dials into the user's computer via a modem and attempts to resolve the user's problems while logged onto the user's system. While this gives the representative a better opportunity to assess the user's problem, it will be appreciated that this level of service is also time consuming. Moreover, this type of service generally cannot be cost justified in personal computer applications.

It is therefore an object of the present invention to provide a method for performing remote diagnostic services and remote restoring services on a personal computer system.

### Summary of the Invention

Accordingly, the present invention provides a system for performing remove restoring services comprising:
a user computer adapted to execute a self-diagnostic program to produce user computer information, to transmit the user computer information through a communications line and to perform a restoring routine in response to data received through the communications line; and
a service support computer adapted to receive and analyze the user information and to transmit the said data through the communications line to permit the user computer to restore a user computer failure detected by the said analysis.

Preferably, the system further comprises means for setting a service mode in the user computer and in which the user computer is adapted to produce and transmit the user computer information only when the service mode is selected.

Preferably, both the user computer and a service support computer include a modem which interfaces the computer to the communications line.

Preferably, the self-diagnosis routine is adapted to test the computer's booting and hardware environments.

The said data may include a script set-up and/or a computer environment program. The user computer is preferably further adapted to re-install the transmitted script set-up or computer environment program and to re-boot itself.

Preferably, the user computer is further adapted to transmit user computer identification information to the service support computer and the service support computer is further adapted to receive and store the user computer identification information.

The service support computer may further comprise means for outputting the analyzed user information.

The present invention also extends to a method of performing remove restoring services comprising:
executing a self-diagnostic program in a user computer to produce user computer information;
transmitting the user computer information through a communications line;
receiving the user information in a service support computer;
analysing the user information;
transmitting data through the communications line to the user computer in dependence upon the results of the analysis; and
performing a restoring routine in the user computer in response to the data received through the communications line to restore a user computer failure detected by the said analysis.

The method may further comprise setting a service mode in the user computer such that the user computer information is produced and transmitted only when the service mode is selected.

Preferably, the method further comprises, after setting the service mode, checking whether the user computer is equipped with a modem.

Preferably, the said data includes a script set-up and/or a computer environment program, and the method further comprises:
re-installing the transmitted script set-up or computer environment program in the user computer; and
terminating the communication of the service support computer with the user computer.

The present invention also extends to a method of performing remove restoring services comprising:
executing a self-diagnostic program in a user computer to produce user computer information;
transmitting the user computer information through a communications line;
receiving the user information in a service support computer;
analysing the user information; and
printing or storing the results of the analysis.

The self-diagnosis program may be a POST program having test programs directed towards several peripheral devices.

### Brief Description of the Drawings

The present invention will now be described by way of example with reference to the accompanying drawings in which:
Fig. 1 is a schematic diagram of a computer environment to which a system for performing remote restoring services according to the present invention may be applied:
Fig. 2 is a block diagram of a user computer which is located on the user side;
Fig. 3 is a block diagram of a service support computer which is located on the computer manufacture's customer service line; and
Fig. 4 through 10 are flow diagrams showing the process steps of remote diagnostic service and remote restoring services.

### Description of the Preferred Embodiments

The present invention is intended to be used primarily in the realm of personal computers. The present invention requires a number of preconditions. First, the user's computer must be capable of operating a telephone modem capability even though it fails to operate in the manner expected. Second, the user needs access to a service support computer having a telephone modem capability and knows the service support telephone number. Third, the user's computer must be capable of performing diagnostic services, particularly a power on self test (POST).

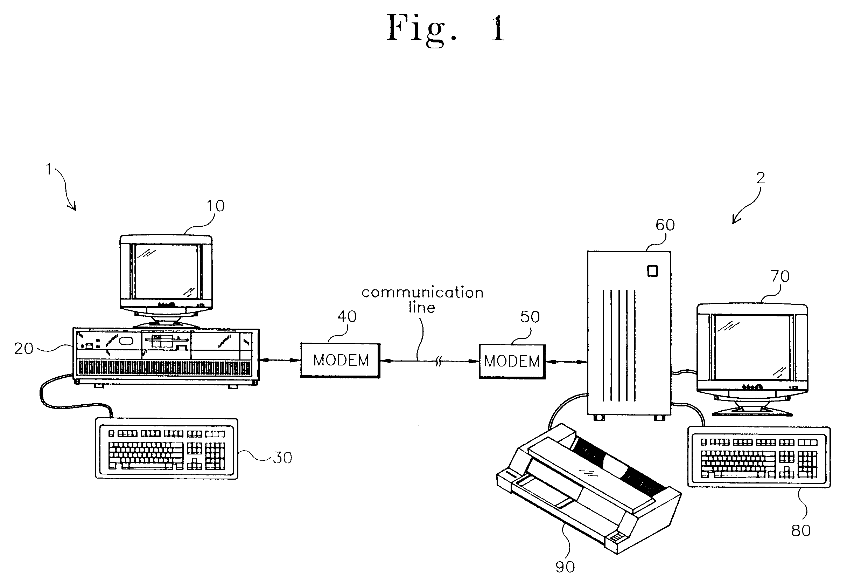

Fig. 1 is a block diagram of an illustrative hardware environment to which a system for performing remote restoring services according to the present invention is applied. A user experiences problems on computer system 1 and is unable to resolve the problem utilizing the technical manuals or diagnostic programs provided by the computer manufacture. The user calls a service support representative for aid in resolving the problem. The service support telephone number is generally supplied by the computer manufacture upon the purchase of the computer. The service support may be part of the computer manufacturer's service organization or may be run by a separate company which has been contracted to provide this service.

The representative is equipped with a service support computer 2 on which he records information related to the user's problem. The service support computer 2 is connected to a user's modem by a service support modem. Based on the hardware environment, the system for performing the remote restoring services may detect operating conditions of the user's computer through a communication line which is connected between the modems. The operating conditions of the user's computer 1 include generating or transmitting the result which is obtained by performing the POST. The system may analyze the operation conditions of the user's computer 1 and restore the user's computer 1 by means of the service support computer 2. Also the system may report the operation conditions of the user's computer 1, if necessary.

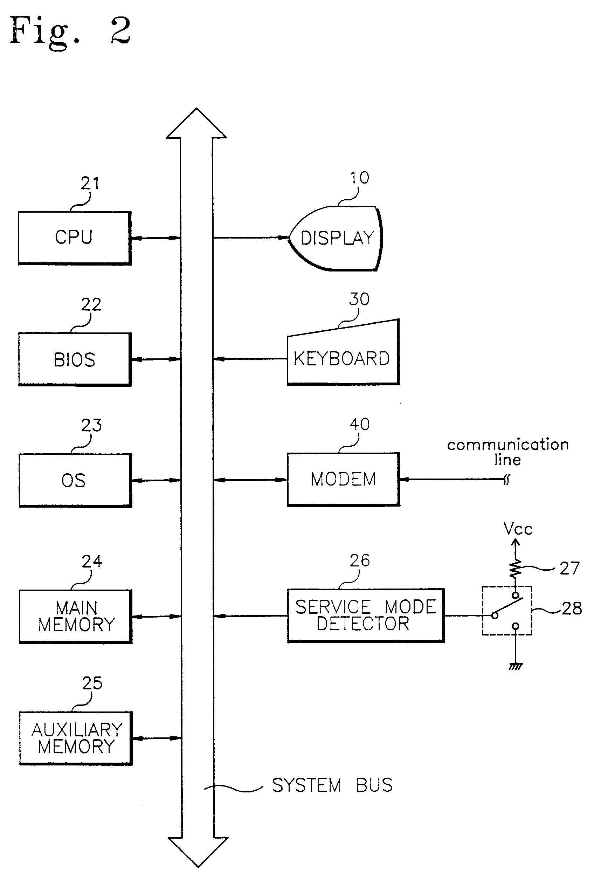

On the user side, Fig. 2 illustrates a block diagram of the user computer 1 which has a modem 40 connected to its system bus, a switch 28 for setting a service mode and a service mode detector 26 for detecting a service mode selecting signal from the switch 28. The service mode detector 26 may be constituted by a microcomputer, or implemented in a CPU 21.

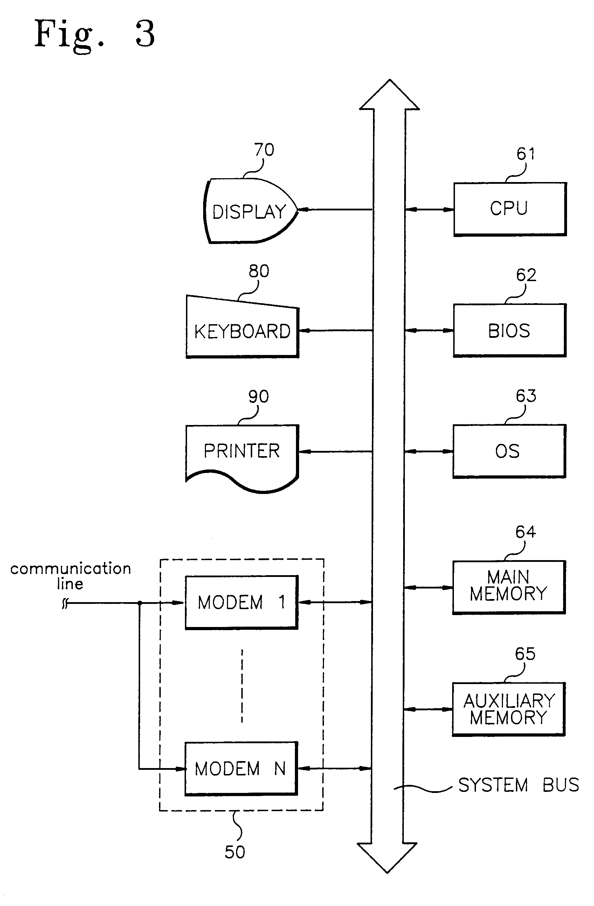

On the customer service side, Fig. 3 illustrates a block diagram of the service support computer 2 which has a modem 50 connected to its system bus and the communication line. The service support computer 2 may utilize a customer service script disk on which programs for performing remote restoring services are recorded.

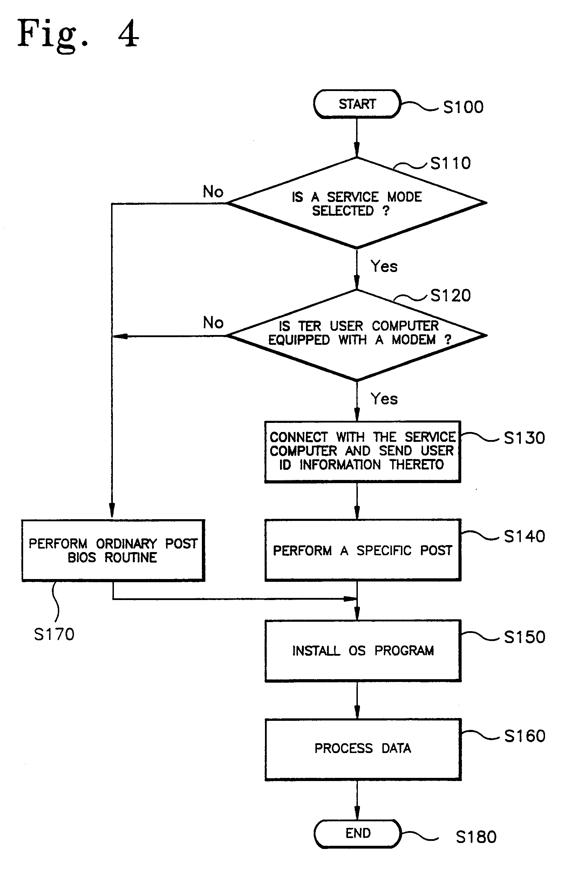

Figs. 4 through 6 are flow diagrams to be run on the user computer so as to perform remote diagnostic tests. Control operation of the user computer begins at step S100. The control proceeds to step S1109, wherein, when the suer selects a service mode using the switch 28 to call the service support computer 2, the user computer determines whether the service mode is selected. If the service mode is selected, the control proceeds to step S120. In step S120, the user computer determines whether it is equipped with the modem 40. If the user computer is not equipped with the modem 40 or if the service mode is not selected, the control proceeds to step S170. In step S170, the user computer performs an ordinary POST routine. If the user computer is equipped with the modem 40, the control proceeds to step S130. In step S130, the user computer performs a routine that is connected to the service support computer via the modem 40 and the user's ID information are sent to the service support computer.

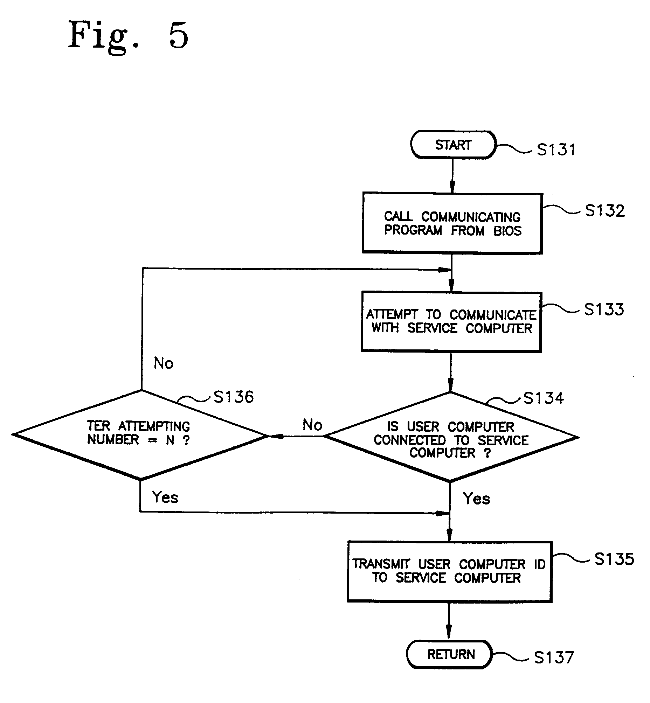

Turning now to Fig. 5, the routine for connecting the user computer 1 to the service support computer 2 and for sending the user's identification information thereto begins at step 131. In step S132, the CPU 21 of the user computer then calls a predetermined communication program in the BIOS 22, and the control proceeds to step S133. In step S133, the user computer 1 attempts to communicate with the service support computer 2 on the basis of the information such as a service support computer telephone number, etc. The control then proceeds to step 134, wherein the user computer 1 determines whether it may be communicate with the service support computer 2. If the user computer 1 may communicate with the service support computer, the control proceeds to step S135, wherein the user computer 1 starts to send the user computer identification information to the service support computer 2. If the user computer 1 does not communicate with the service support computer 2, the control proceeds to step S136, wherein the user computer 1 repeats a predetermined number of times the attempt to communicate with the service support computer 2 until the attempt is accomplished.

Returning now to Fig. 4, if the above routine for sending the user computer identification information to the service support computer is terminated, the control proceeds to step S140, wherein the user computer 1 performs a routine for performing POST and sending the result to the service support computer 2.

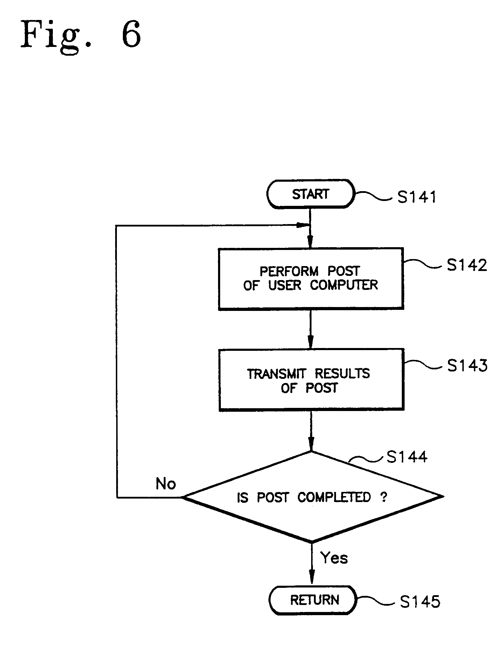

Turning to Fig. 6, the routine to be run on the user computer begins at step 141. In step S142, the user computer 1 performs the POST itself. The POST may include tests direct toward several peripheral devices. The control proceeds to step S143, wherein the user computer sends the results of POST (i.e. self tested information) to the service support computer through the modem. In step S144, the user computer determines whether the POST is completed. If so, the control proceeds to step S145 and then returns to step S150, and if not, the control jumps to step S142, wherein the POST routine continues to be performed.

Returning to Fig. 4, after the completion of the POST route, the user computer instals the OS (operating system) program at step S150 and processing data at step S160.

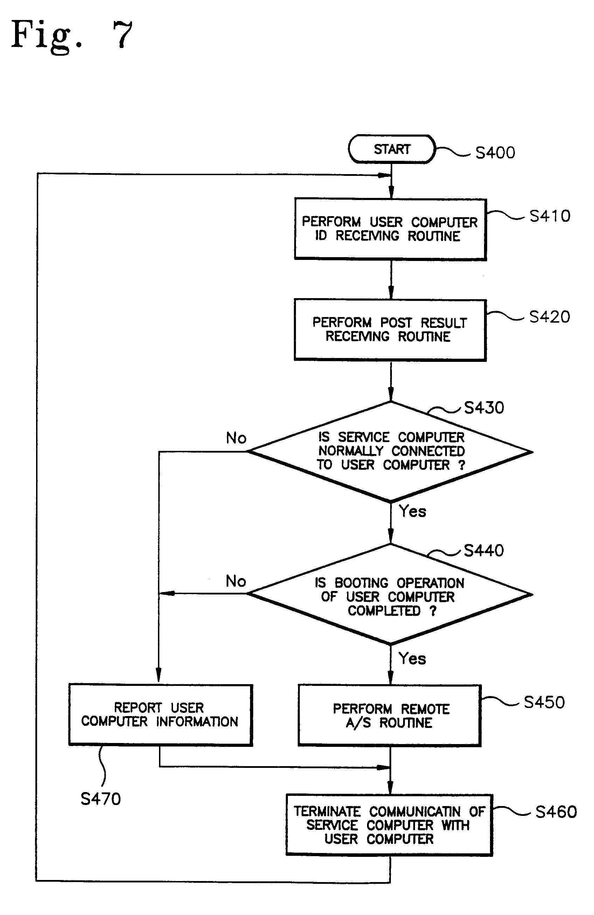

Figs. 7 through 10 are flow diagrams to be run on the service support computer 2 for performing remote restoring services. In this example, it is assumed that the service support computer receives a service call from a specific user computer through a modem. Control operation of the service support computer begins at step S400. The control proceeds to step S410, wherein the service support computer 2 performs a routine for communicating with the user computer and receiving the user computer ID information.

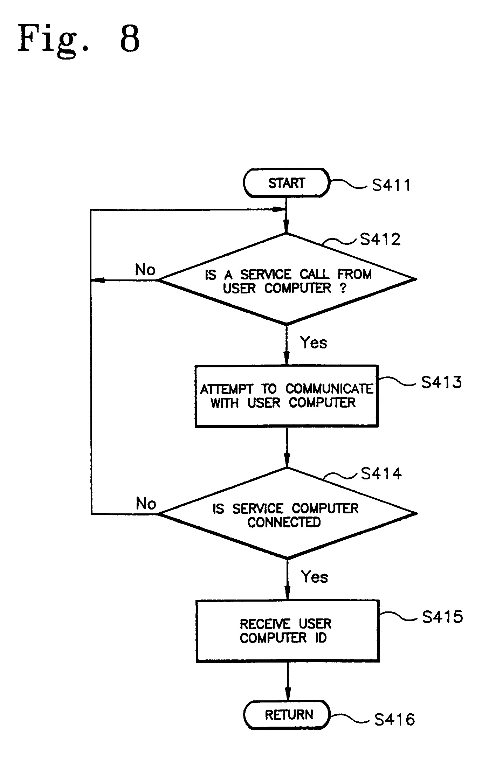

Turning now to Fig. 8, the routine for communicating with the user computer and receiving the ID information begins at step 411. In step S412, the CPU 61 of the service support computer 2 then determines whether there is a service call provided from a specific user computer. If so, the control proceeds to step S413, wherein the service support computer 2 attempts to communicate with the specific user computer 1 through a modem 50. If there is not a service call, the computer 2 repeatedly checks a service call. In step S414, the service support computer determines whether it may communicate with the user computer. If so, the control proceeds to step S415, wherein the service support computer 2 may receive the user computer ID information. If not, the control jumps to step S412 so as to repeatedly check a service call from a specific user computer.

Returning now to Fig 7, after the service support computer terminates receival of the user computer ID information, the control proceeds to step S420, wherein the service support computer performs a routine for receiving the results of POST provided from the user computer.

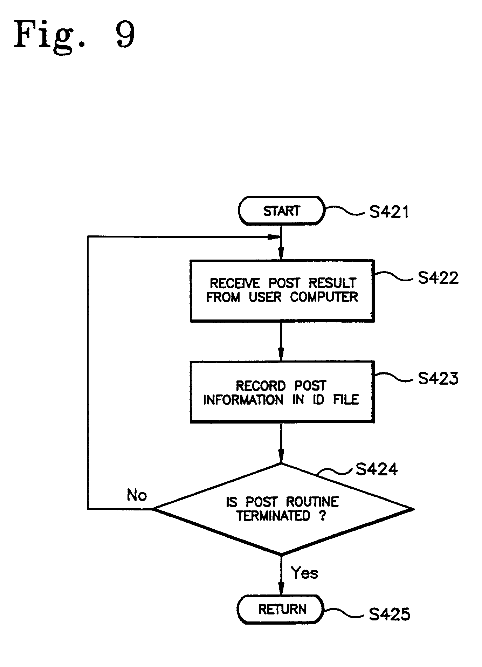

With reference to Fig 9, the routine for receiving the results of POST is run on the service support computing and begins at step S421. The control proceeds to step S422, wherein the service support computer 2 may receive the POST information provided from the user computer 1. In step S423, the service support computer records the POST information in a file corresponding to the ID information. The control proceeds to step S424, wherein the service support computer determines whether the POST routine is terminated on the user computer or an error answer signal is provided from the user computer. The error answer signal is generated when the user computer halts due to a breakdown. If the service support computer normally communicates with the user compUter and the POST routine in the user computer continues to be run on the user computer, the control proceeds to step S422, wherein the POST information receiving routine continues to be performed on the service support computer. If not, the control proceeds to step S425 and then returned to step S430.

Turning again to Fig. 7, after the POST information receiving routine is terminated, at step S430, the service support computer determines whether it normally communicates with the user computer. If so, the control proceeds to step S440, wherein the service support computer determines whether the booting operation of the user computer is normally completed. When the booting operations is normally completed, the control proceeds to step S450, wherein a remote restoring service routine (hereinafter, referred to as "remove after service-routine") is performed in order that the user computer failure can be restored.

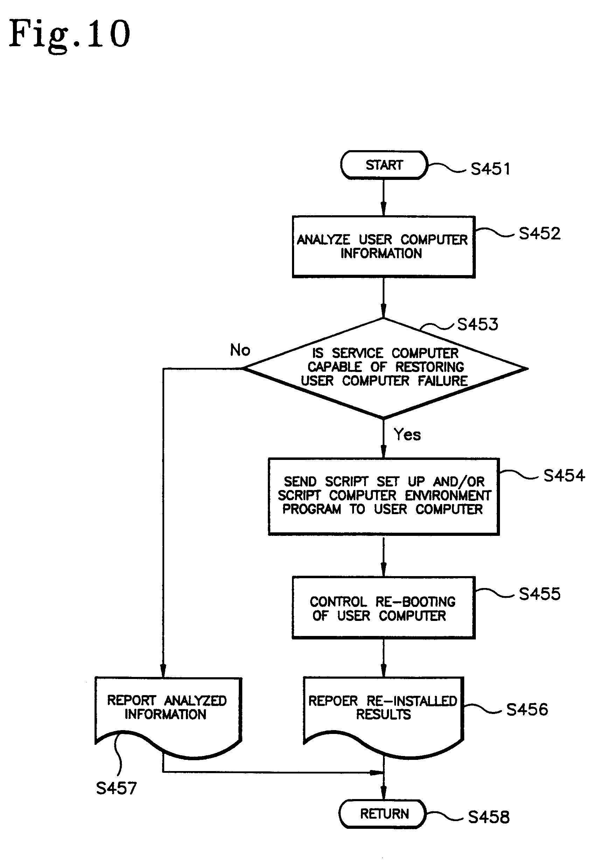

Fig. 10 is a flow diagram showing the remote after-service routine to be run on the service support computer. If the routine begins at step S451, the control proceeds to step S452, wherein the service support computer analyzes the information including the results of the POST provided from the user computer. In step S453, the service support computer determines whether it may restore the user computer with the remove after-service on the basis of the analyzed results of the information. If so, the control proceeds to step S454, wherein the service support computer sends a script set up and/or a script computer environment programs for restoring the user computer failure to the user computer. The user computer may then re-install the sent script programs. The control proceeds to step S445, wherein the service support computer enables the user computer to be re-booted. In step S456, the re-installed results of the programs may be reported by output devices such as a printer 90 etc, or recorded in a specific file, if necessary. If at step S453, the service support computer may not restore the support computer may not restore the user computer with the remote after-service, the control proceeds to step S457, wherein the information provided from the user computer may be reported by the printer 90 or recorded in the specific file.

Finally, turning again to Fig. 7, the control proceeds to step S460 after the remove after-service routine is completed, wherein the service support computer terminates communication with the user computer. In step S430 or S440, if the service support computer can not normally communicate with the user computer, or if the booting of the user computer is not normally completed, the control proceeds to step S470, wherein the information provided from the user computer are printed or recorded to be reported to a customer service representative.

As described above, the preferred embodiment permits the service support computer to perform remote diagnostic tests (including POST) on a user computer while the user computer calls the service support computer. After the user computer transmits the test results to the service support computer, the service support computer performs a remote restoring service routine. Therefore, the end embodiment permits the service support computer to provide a remote after-service to the user computer through a communication line, so that the user computer failure can be restored.

It will of course be appreciated that the present invitation may be practised using specialised test files or other hardware installations other than those described above.

## Claims

1. A system for performing remove restoring services comprising:
a user computer adapted to execute a self-diagnostic program to produce user computer information, to transmit the user computer information through a communications line and to perform a restoring routine in response to data received through the communications line; and
a service support computer adapted to receive and analyze the user information and to transmit the said data through the communications line to permit the user computer to restore a user computer failure detected by the said analysis.

2. A system according to claim 1 further comprising means for setting a service mode in the user computer and in which the user computer is adapted to produce and transmit the user computer information only when the service mode is selected.

3. A system according to claim 1 or claim 2 in which both the user computer and a service support computer include a modem which interfaces the computer to the communications line.

4. A system according to any preceding claim in which the self-diagnosis routine is adapted to test the computer's booting and hardware environments.

5. A system according to any preceding claim in which the said data includes a script set-up and/or a computer environment program.

6. A system according to claim 5 in which the user computer is further adapted to re-install the transmitted script set-up or computer environment program and to re-boot itself.

7. A system according to any preceding claim in which the user computer is further adapted to transmit user computer identification information to the service support computer and the service support computer is further adapted to receive and store the user computer identification information.

8. A system according to claim 7 in which the service support computer further comprises means for outputting the analyzed user information.

9. A method of performing remove restoring services comprising:
executing a self-diagnostic program in a user computer to produce user computer information;
transmitting the user computer information through a communications line;
receiving the user information in a service support computer;
analysing the user information;
transmitting data through the communications line to the user computer in dependence upon the results of the analysis; and
performing a restoring routine in the user computer in response to the data received through the communications line to restore a user computer failure detected by the said analysis.

10. A method according to claim 9 further comprising setting a service mode in the user computer and in which the user computer information is produced and transmitted only when the service mode is selected.

11. A method according to claim 10 further comprising, after setting the service mode, checking whether the user computer is equipped with a modem.

12. A method according to any one of claims 9-11 in which the said data includes a script set-up and/or a computer environment program, and further comprising:
re-installing the transmitted script set-up or computer environment program in the user computer; and
terminating the communication of the service support computer with the user computer.

13. A method of performing remove restoring services comprising:
executing a self-diagnostic program in a user computer to produce user computer information;
transmitting the user computer information through a communications line;
receiving the user information in a service support computer;
analysing the user information; and
printing or storing the results of the analysis.

14. A method according to any one of claims 9-13 in which the self-diagnosis program is a POST programs having test programs directed towards several peripheral devices.

15. A system for performing remove restoring services as described with reference to and as illustrated in FIGs. 2 et seq. of the accompanying drawings.

16. A method of performing remove restoring services as described with reference to and as illustrated in FIGs. 2 et seq. of the accompanying drawings.
